# EUROPEAN PATENT APPLICATION

(11) **EP 3 808 910 A2**
(43) Date of publication of application: **21.04.2021**
(21) Application number: 19802231.1
(22) Date of filing: 07.06.2019
(51) Int. Cl.: E04B 1/80, C09K 5/06, F24F 5/00, F28D 20/02, B65D 6/06, E04B 1/74

(54) **PACKAGING WITH SAFETY OPENING**

(30) Priority: 15.06.2018 ES 201830915 U
(71) Applicant: Acondicionamiento Tarrasense, 08225 Terrassa (Barcelona) (ES)
(72) Inventor: FORTUNY CUADRA, Aleix Heribert, 08225 Terrassa (Barcelona) (ES)
(74) Representative: Pons
(86) International application number: PCT/ES2019/070393
(87) International publication number: WO 2019/238989

(57) **Abstract**

Packaging with a safety opening, for containing products with restricted access. The packaging comprises: an outer casing (4) with an outer body (5) equipped with a front portion having a front opening (6); and a container (1) comprising a container body (3) equipped with a front portion, which is intended to contain a product (2), said container (1) being slidable inside the casing (4) through the opening (6), and at least one elongate protrusion (7) protruding from the container body (3) in the front portion thereof. The casing (4) comprises, in correspondence with each protrusion (7), a recess (8) in the front portion of the outer body (5), for housing the corresponding protrusion (7). In the closed position, none of the protrusions (7) protrude from the corresponding recesses (8) or from the outer body (5).

## Description

### OBJECT OF THE INVENTION

The present invention can be included within the packaging sector. More specifically, the object of the invention relates to packaging with a safety opening, preferably intended for domestic use, for example for containing products with restricted access, for example, restricted for children or for the elderly, such as medicines, detergent pods, etc.

### BACKGROUND OF THE INVENTION

The patent documents ES2628254T3 and US9981788B1 describe packaging with safety openings, comprising an outer body and an inner container, movably housed in the outer body, wherein the inner container has deformable protrusions, likewise, the outer body has cavities in correspondence with the protrusions so that the protrusions protrude through the cavities, locking the inner container. To open the packaging, the user must simultaneously press all the protrusions towards the inside of the cavities, in order to unlock the inner container, which can therefore be moved towards the outside of the outer body.

### DESCRIPTION OF THE INVENTION

The present invention describes packaging with safety opening elements, which enables it to be opened only by users knowledgeable in the correct way to operate the packaging, in order to prevent access from non-knowledgeable users, for example children, to a product contained in the packaging.

In particular, the invention is characterised in that, instead of deformable protrusions, which work together with corresponding cavities, to lock the movement of the container, preventing the container from moving with respect to the body, the packaging incorporates:
- at least one protrusion, not necessarily deformable, located in the front portion of the container, and protruding from the container; and
- for each protrusion, a corresponding recess, practiced in the front portion of the outer body, for housing the corresponding protrusion;
wherein when the packaging is closed, and therefore, the protrusions are housed in the recesses, the protrusions do not protrude from the outer body, preferably being flush, although they may also remain inside the same.

By means of the described configuration, a non-knowledgeable user, for example a child, will not be able to operate the container in order to be able to extract it from the outer body, since there are no elements of the container protruding from the outer body. In this manner, the only element of the container that is accessible by the user are the protrusions. Only a knowledgeable person, such as an adult, can know that in order to open the container they must hold the rear portion of the outer body with one hand, and exert a reduced pressure, with one or several fingers of the other hand, in order to move the protrusions towards the outside. To further increase the selective effect with respect to the user, the protrusions are preferably flush with the outer body, or inside the same. The present invention has, with respect to the packagings described in the background, packaging with a safety opening, which requires less constructive complication, although the opening thereof is less intuitive for non-knowledgeable users.

In accordance with what has just been described, the packaging with a safety opening is notable for the following aspects:
- It enables products to be stored, the access of which, generally in a domestic environment, is to be restricted for children, for example, because they are dangerous products, such as: medicines, detergent pods, abrasive products, blades, nails, screws, etc. This is because the opening is not very intuitive and, therefore, a user must be knowledgeable in order to open the packaging.
- However, special psychomotor skills are not required to open the packaging, unlike other packaging with safety openings. Therefore, it is of a friendly nature for the elderly, since it does not require pressing strongly on any deformable element, or coordinating a pressure with movements of the packaging, etc. This feature makes it easier for people with joint problems, such as arthritis, to be able to open the packaging without difficulty.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following:
Figure 1.- Shows a perspective view of the packaging of the invention.
Figure 2.- Shows a perspective view of the container and the outer casing separately.
Figure 3.- Shows a perspective view illustrating the manner of opening the packaging.

### PREFERRED EMBODIMENT OF THE INVENTION

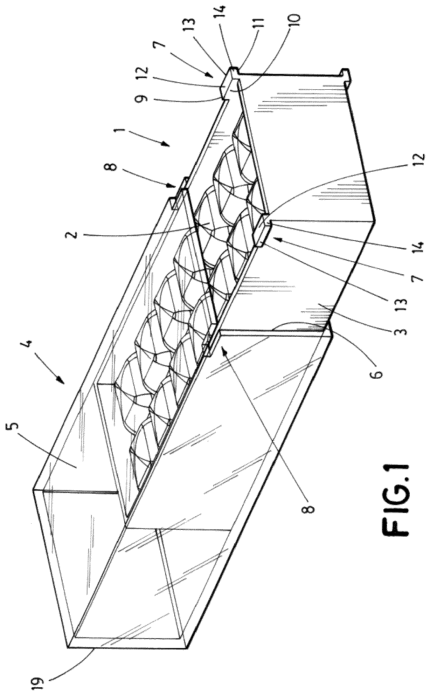

Next, with the aid of the aforementioned included figures 1-3, a detailed description is given of a preferred exemplary embodiment of the packaging with a safety opening object of the present invention.

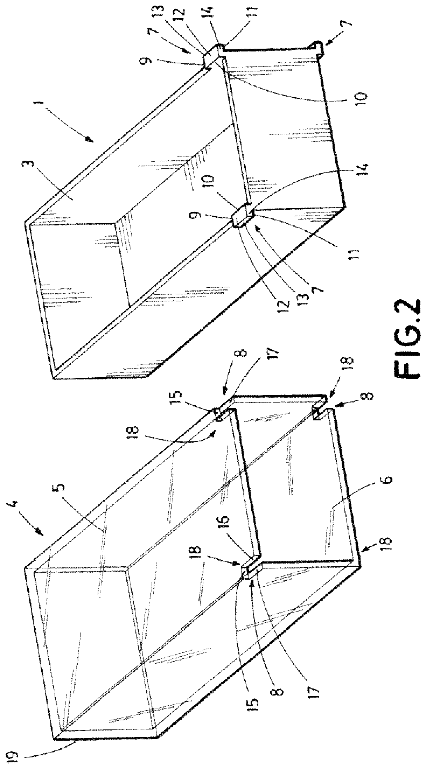

As seen in figures 1 and 2, the packaging of the invention comprises a container (1), open at the top, intended to house a product (2) which is intended to be kept out of reach from users for whom the product (2) could be dangerous. In particular, the container (1) can be intended to contain products (2) which are to be kept out of the reach of children, for example: medicines, detergent pods for dishwashers, etc. The container (1) comprises a container body (3) having a front portion and a rear portion. Figure 1 shows a particular example wherein the container (1) is intended to contain, as a product (2), detergent pods for dishwashers.

The packaging additionally comprises an outer casing (4). The casing (4) consists of an outer body (5) intended to internally house the container (1) in a movable manner along a longitudinal direction, between an open position, which enables access to the container (1), and at least one closed position, which does not enable access to the container (1). The outer body (5) likewise comprises a front portion and a rear portion, the front portion being opened by means of an opening (6). The container (1) is intended to stay inserted in the outer body (5). The container (1) is introduced through the rear portion thereof, through the opening (6) of the outer body (5). When the container (1) is completely inserted in the outer body (5), the packaging is in the closed position. In the closed position, the container (1) is housed in the outer body (5), wherein the front portion of the container body (3) does not protrude, in the longitudinal direction, from the front portion of the outer body (5), but rather preferably, both are flush or inside the same. The outer body (5) and the container body (3) are configured to fit snugly, with a small clearance.

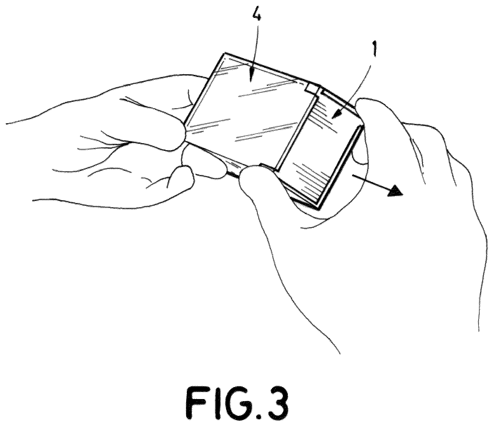

In the front portion of the container body (3) there is at least one protrusion (7) with an elongated configuration, protruding from said container body (3). Likewise, in the front portion of the outer body (5) there is a corresponding recess (8), in order to house each corresponding protrusion (7). In the closed position, the protrusion (7) does not protrude from the recess (8) or from the outer body (5), preferably being flush or inside the same, likewise it is accessible by a user, in order to actuate the movement of the container (1) in the longitudinal direction, as illustrated in figure 3.

According to the embodiment illustrated in figures 1-3, the protrusions (7) comprise an outer contour defined by protrusion faces (9, 10, 11, 12, 13), which in turn include: first (9), second (10), third (11), fourth (12), fifth (13) and sixth (14) protrusion faces. Moreover, the recesses (8) comprise an outer contour defined by recess faces (15, 16, 17), which in turn include: first (15), second (16) and third (17) recess faces. In the closed position, the first protrusion face (9), located on the rear, abuts with the first recess face (15); while the second protrusion face (10), located on the inside, abuts with the second recess face (16); likewise, the third protrusion face (11), located on the bottom, abuts with the third recess face (17); with regards to the fourth protruding face (12), located on top, it is flush with the upper portion of the outer body (5), or on the inside; as well as the fifth protruding face (13), located on the outside, is flush with the side of the outer body (5), or on the inside; and the sixth protrusion face (14), located on the front, is flush with the front face of the container body (3), or inside the same.

Preferably, both the outer body (5) and the container body (3) define at least one vertex (18), the protrusion (7), or the protrusions (7), being at least one of the vertices (18) of the outer body (5) and of the container body (3). Even more preferably, the outer body (5) and the container body (3) have a prismatic shape, for example, parallelepiped, with several vertices (18).

If there is more than one vertex (18), two protrusions (7) and two corresponding recesses (8) are preferably included. As a particular case in a parallelepiped manner, two recesses (8) and two protrusions (7), located in opposite vertices (18), are preferred. Another preferred option involves including three recesses (8) and three protrusions (7), in three contiguous vertices (18).

Preferably, the recesses (8) and the protrusions (7) are oriented along the longitudinal direction.

The described configuration enables a user to be able to open the packaging, meaning, to move the container (1) with respect to the casing (4) along the longitudinal direction. To do so, it is enough to hold the casing (4) by the rear portion thereof and press with one finger of the same hand at least one of the protrusions (7) and, subsequently, move the container (1) maintaining the pressure on the protrusions (7). Moreover, the protrusions (7) are the only elements of the container (1) which are accessible by the user. Since the protrusions (7) do not protrude on the outside with respect to the contour of the outer body (5), it is not obvious for a non-knowledgeable user, for example, a child, what is the correct way of operating the protrusions (7) in order to be able to open the packaging, thus preventing children from opening the packaging and accessing dangerous products.

The casing (4) has a rear portion (19), see figures 2 and 3 which is preferably rigid, for preventing the packaging from being opened by means of a mere push from the rear portion (19). In particular, the rear portion (19) can be made, for example, of rigid cardboard, or of a rigid polymeric material. The rest of the outer body (5), as well as the container (1) can have a rigid or flexible configuration.

The optimal exemplary embodiment has two protrusions (7), together with the corresponding recesses (8) thereof, located in opposite vertices (18). A single protrusion (7), with the corresponding recess (8) thereof, would be sufficient to obtain the effect of the invention. Furthermore, a greater number of recesses (8) and protrusions (7), for example three, facilitates the handling for users with larger hands.

## Claims

1. A packaging with a safety opening, comprising:
- an outer casing (4), comprising an outer body (5) equipped with a front portion with a front opening (6); and
- a container (1), comprising:
- a container body (3) with a front portion, and which is intended to contain a product (2), the container (1) being slidable within the housing (4), through the opening (6), along a longitudinal direction, between an open position, which enables access to the container body (3), and at least one closed position, which does not enable access to the container body (3); and
- at least one elongated protrusion (7), protruding from the container body (3) in the front portion of the container body (3);
wherein the casing (4) further comprises, in correspondence with each protrusion (7), a recess (8), in the front portion of the outer body (5), in order to house the corresponding protrusion (7);
**characterised in that** each protrusion (7) and each corresponding recess (8) are configured such that, in the closed position, each protrusion (7) does not protrude from the recess (8) thereof or from the outer body (5), likewise it is accessible by a user, in order to actuate the movement of the container (1) in the longitudinal direction.

2. The packaging with a safety opening, according to claim 1, **characterised in that**, in the closed position, the front portion of the container body (3) does not protrude, in the longitudinal direction, from the front portion of the outer body (5).

3. The packaging with a safety opening, according to claim 2, **characterised in that**, in the closed position, the front portion of the container body (3) is flush, in the longitudinal direction, with the front portion of the outer body (5).

4. The packaging with a safety opening, according to any one of claims 1-3, **characterised in that**, in the closed position, the protrusions (7) are flush with the outer body (5).

5. The packaging with a safety opening, according to any one of claims 1-4, **characterised in that** both the outer body (5) and the container body (3) define at least one vertex (18), the at least one recess (7) and the at least one protrusion (8) being located in the corresponding vertex (18) thereof.

6. The packaging with a safety opening, according to claim 5, **characterised in that** the outer body (5) and the container body (3) have a prismatic shape, with several vertices (18).

7. The packaging with a safety opening, according to claim 6, **characterised in that** the outer body (5) and the container body (3) have a parallelepiped shape.

8. The packaging with a safety opening, according to any one of claims 1-7, **characterised in that** it comprises two projections (7), as well as the two corresponding recesses (8) thereof.

9. The packaging with a safety opening according to claims 7 and 8, **characterised in that** the two protrusions (7) and the two corresponding recesses (8) thereof are in two opposite vertices (18).

10. The packaging with a safety opening, according to any one of claims 1-7, **characterised in that** it comprises three projections (7), as well as the corresponding recesses (8) thereof.

11. The packaging with a safety opening according to claims 7 and 10, **characterised in that** the three projections (7) and the three corresponding recesses (8) thereof are in three contiguous vertices (18).

12. The packaging with a safety opening, according to any one of claims 1-11, **characterised in that** the casing (4) has a rear portion (19) which is rigid, in order to prevent the packaging from being opened by a movement of the container (1) pushing on the rear portion (19) of the casing (4).
